(19) Europäisches Patentamt
European Patent Office
Office européen des brevets

(11) Veröffentlichungsnummer: **0 675 149 A1**

# (12) EUROPÄISCHE PATENTANMELDUNG

(21) Anmeldenummer: **95103862.9**

(22) Anmeldetag: **16.03.95**

(51) Int. Cl.[6]: **C08G 77/38**, C07F 15/00

(30) Priorität: **23.03.94 DE 4410059**

(43) Veröffentlichungstag der Anmeldung:
**04.10.95 Patentblatt 95/40**

(84) Benannte Vertragsstaaten:
**AT BE DE FR GB IT NL**

(71) Anmelder: **Wacker-Chemie GmbH**
**Hanns-Seidel-Platz 4**
**D-81737 München (DE)**

(72) Erfinder: **Dauth, Jochen, Dr.**
**Piracher Strasse 78**
**D-84489 Burghausen (DE)**
Erfinder: **Herzig, Christian, Dr.**
**Schröckenbauer 1**
**D-83373 Taching am See (DE)**
Erfinder: **Deubzer, Bernward, Dr.**
**Virchowstrasse 14**
**D-84489 Burghausen (DE)**
Erfinder: **Peetz, Udo**
**Kreuzfelsen 2**
**D-84489 Burghausen (DE)**

## (54) Metallkomplexe der 8. Nebengruppe mit ungesättigten Siloxanliganden, deren Herstellung und Verwendung.

(57) Metallkomplexe der 8. Nebengruppe mit ungesättigten Siloxanliganden erhältlich durch Umsetzung von Verbindungen der Metalle der 8. Nebengruppe (A) mit Organopolysiloxanen, die mindestens drei SiC-gebundene organische Reste mit endständiger aliphatischer Kohlenstoff-Kohlenstoff-Doppelbindung und mindestens drei Kohlenstoffatomen aufweisen (B).

EP 0 675 149 A1

Die Erfindung betrifft Metallkomplexe der 8. Nebengruppe mit ungesättigten Siloxanliganden, insbesondere Platinkomplexe, deren Herstellung aus Metallverbindungen und aliphatisch ungesättigten Organopolysiloxanen und deren Verwendung in durch Anlagerung von Si-gebundenem Wasserstoff an aliphatische Mehrfachbindung vernetzenden Massen.

Der Begriff "Organopolysiloxane" soll im Rahmen dieser Erfindung sowohl polymere als auch oligomere und dimere Organosiloxane sowie Copolymere aus Organosiloxanblöcken und Kohlenwasserstoffblöcken umfassen.

Der Einsatz von Metallverbindungen der 8. Nebengruppe, wie z.B. Chlorplatinsäure, als Katalysatoren bei der Anlagerung von Si-gebundenem Wasserstoff an aliphatische Kohlenstoff-Kohlenstoff-Mehrfachbindung, der sogenannten Hydrosilylierung, ist bereits seit langem bekannt. Des weiteren ist bekannt, daß die Kompatibilität von Chlorplatinsäure in Organosiliciumreaktionsmischungen verbessert werden kann, indem die Chlorplatinsäure mit einer aliphatisch ungesättigten Organosiliciumverbindung umgesetzt wird. Hierzu sei beispielsweise auf GB 1 127 675 (Dow Corning Corporation; ausgegeben am 18. September 1968) verwiesen.

In US 3,775,452 (General Electric Co.; ausgegeben am 27. November 1973) wird ein Verfahren zur Herstellung von Platin-Siloxan-Komplexen beschrieben, bei dem ungesättigte Organosiliciumverbindungen, insbesondere Vinylsiloxan, mit Platinhalogenid gemischt und zur Entfernung des entstandenen Halogenwasserstoffs mit Base behandelt wird, wobei ein hoher Überschuß an Vinylsiloxan benötigt wird.

Des weiteren wird in US 5,175,325 A (Dow Corning Ltd.; ausgegeben am 29. Dezember 1992) bzw. der entsprechenden DE 42 04 305 A ein Verfahren zur Herstellung von Platin-Siloxan-Komplexen beschrieben, bei dem Platin(II)halogenide mit Organosiloxanen mit 2 bis 4 SiC-gebundenen aliphatisch ungesättigten Resten umgesetzt werden.

Gegenstand der vorliegenden Erfindung sind Metallkomplexe der 8. Nebengruppe mit ungesättigten Siloxanliganden erhältlich durch Umsetzung von Verbindungen der Metalle der 8. Nebengruppe (A) mit Organopolysiloxanen, die mindestens drei SiC-gebundene organische Reste mit endständiger aliphatischer Kohlenstoff-Kohlenstoff-Doppelbindung und mindestens drei Kohlenstoffatomen aufweisen (B).

Ein weiterer Gegenstand der vorliegenden Erfindung ist ein Verfahren zur Herstellung von Metallkomplexen der 8. Nebengruppe mit ungesättigten Siloxanliganden durch Umsetzung von Verbindungen der Metalle der 8. Nebengruppe (A) mit Organopolysiloxanen, die mindestens drei SiC-gebundene organische Reste mit endständiger aliphatischer Kohlenstoff-Kohlenstoff-Doppelbindung und mindestens drei Kohlenstoffatomen aufweisen (B), in Gegenwart von polarem organischen Lösungsmittel sowie gegebenenfalls Neutralisationsmittel.

Beispiele für die erfindungsgemäß eingesetzten Verbindungen der Metalle der 8. Nebengruppe sind (A) Cyclooctadien$PtCl_2$, $OsCl_3$, $H_2IrCl_6$, $IrCl_3$, $RhCl_3$, $RhBr_3$, $RuCl_3$, $PdCl_2$, $PtCl_2$, $Na_2PtCl_4$, $PtCl_4$, $H_2PtCl_6 \cdot 6H_2O$, $Na_2PtCl_6 \cdot 6H_2O$ sowie Umsetzungsprodukte von $PtCl_4$ mit Olefin und primärem Amin oder sekundärem Amin oder primärem und sekundärem Amin gemäß US 4,292,434 A (Wacker-Chemie GmbH; ausgegeben am 29. September 1981) bzw. der entsprechenden DE 30 00 768 A, wie das Umsetzungsprodukt aus in 1-Octen gelöstem $PtCl_4$ mit sec.-Butylamin, oder Ammoniumplatinkomplexe gemäß EP 110 370 A (SWS Silicones Corp.; ausgegeben am 13. Juni 1984).

Bevorzugt handelt es sich bei den erfindungsgemäß eingesetzten Metallverbindungen (A) um Platin(IV)-halogenide, besonders bevorzugt um $H_2PtCl_6 \cdot 6H_2O$.

Bei den Organopolysiloxanen, die mindestens drei SiC-gebundene organische Reste mit endständiger aliphatischer Kohlenstoff-Kohlenstoff-Doppelbindung und mindestens drei Kohlenstoffatomen aufweisen (B), kann es sich um bisher bekannte lineare, verzweigte oder cyclische Organopolysiloxane handeln, die die genannten Bedingungen erfüllen.

Vorzugsweise handelt es sich bei den erfindungsgemäß eingesetzten Organopolysiloxanen (B) um solche aus Einheiten der Formel

$$R_aR^1_bSiO_{\frac{4-a-b}{2}} \quad (I),$$

wobei

R gleich oder verschieden sein kann und aliphatisch gesättigte, gegebenenfalls substituierte SiC-gebundene Kohlenwasserstoffreste mit 1 bis 18 Kohlenstoffatomen bedeutet,

$R^1$ gleich oder verschieden sein kann und SiC-gebundene Reste der Formel $-R^2-CH=CH_2$ bedeutet

mit $R^2$ gleich zweiwertigen Kohlenwasserstoffresten mit 1 bis 12 Kohlenstoffatomen,

a 0, 1, 2 oder 3 und

b 0, 1, 2 oder 3 ist,

mit der Maßgabe, daß die Summe von a und b kleiner oder gleich 3 ist und Organopolysiloxan (B) pro Molekül mindestens 3 Reste $R^1$ aufweist,

sowie um Copolymere aus Organopolysiloxanblöcken und Kohlenwasserstoffblöcken wie etwa gemäß EP 523 660 A1, die zum Offenbarungsgehalt der vorliegenden Erfindung zu zählen ist, wobei mindestens ein Kohlenwasserstoffblock mindestens zwei Siloxanblöcke verbindet, mit der Maßgabe, daß die genannten Copolymere pro Molekül mindestens drei Reste $R^1$ aufweisen.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptylreste und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der $\alpha$- und der $\beta$-Phenylethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Bevorzugt handelt es sich bei Rest R um Alkylreste mit 1 bis 4 Kohlenstoffatomen, besonders bevorzugt um den Methylrest.

Vorzugsweise handelt es sich bei Rest $R^2$ um $-CH_2-$, $-C_2H_4-$, $-C_3H_6-$,$-C_4H_8-$, $-C_6H_{12}-$, $-C_8H_{16}-$ und $-C_{12}H_{24}-$, wobei $-C_4H_8-$ besonders bevorzugt ist.

Besonders bevorzugt handelt es sich beim Organopolysiloxan (B) um solche Polysiloxane, die im wesentlichen aus Einheiten der Formel

$R^1_cR_{3-c}SiO_{1/2}$ (II)

und

$R^1_dR_{2-d}SiO_{2/2}$ (III)

bestehen, worin R und $R^1$ die oben dafür angegebene Bedeutung haben, c 0, 1, 2 oder 3, bevorzugt 0, ist und d 0, 1 oder 2, bevorzugt 1, ist, mit der Maßgabe, daß Organopolysiloxan (B) pro Molekül mindestens 3 Reste $R^1$ aufweist. Des weiteren können diese Organopolysiloxane noch Einheiten der Formel $R^1_eR_{1-e}SiO_{3/2}$ und $SiO_{4/2}$ enthalten mit R und $R^1$ gleich der obengenannten Bedeutung und e gleich 0 oder 1.

Obwohl in den Formeln (I), (II) oder (III) nicht angegeben, kann R auch die Bedeutung von Vinylrest haben, falls verzweigte Organopolysiloxane vorliegen und die Vinylgruppen nicht in die Endgruppen der Hauptkette eingebaut sind, sondern in den Endgruppen der Seitenäste vorhanden sind, wie beispielsweise durch die Struktur

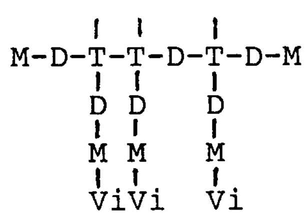

wiedergegeben werden kann mit M gleich $\equiv SiO_{1/2}$-, D gleich $=SiO_{2/2}$- und T gleich $-SiO_{3/2}$-Einheit sowie Vi gleich Vinylrest.

Die erfindungsgemäß eingesetzten Organopolysiloxane (B) haben vorzugsweise bei 25 °C eine Viskosität von maximal 500 $mm^2/s$, besonders bevorzugt von maximal 50 $mm^2/s$.

Der Anteil der Reste $R^1$ im Organopolysiloxan (B) beträgt vorzugsweise 10 bis 50 %, bezogen auf die Anzahl aller SiC-gebundenen Reste.

Insbesondere handelt es sich bei den erfindungsgemäß eingesetzten Organopolysiloxanen (B) um 5-Hexenylpolysiloxane mit Viskositäten von 10 bis 25 $mm^2/s$ bei 25 °C, die aus 5-Hexenylmethylsiloxan-,

Dimethylsiloxan-, Trimethylsiloxan- und 5-Hexenyldimethylsiloxaneinheiten bestehen, sowie Copolymere aus derartigen Polysiloxanen und Kohlenwasserstoffblöcken gemäß EP 523 660 A1, wobei mindestens ein Kohlenwasserstoffblock mindestens zwei Siloxanblöcke verbindet, mit der Maßgabe, daß die genannten Organopolysiloxane pro Molekül mindestens drei Reste $R^1$ aufweisen, wobei die Anzahl der Reste $R^1$ im Organopolysiloxan mehr als 10 % aller SiC-gebundenen Reste beträgt, und die Organopolysiloxane bei 25 °C eine Viskosität von maximal 100 $mm^2/s$ haben.

Die erfindungsgemäß eingesetzten Organopolysiloxane (B) sind kommerziell erhältlich bzw. nach den in der Silicium-Chemie bekannten Verfahren herstellbar.

Bei dem erfindungsgemäßen Verfahren wird Organopolysiloxan (B) und Metallverbindung (A) vorzugsweise in solchen Mengen eingesetzt, daß pro Metallatom der Verbindung (A) 10 bis 1000 SiC-gebundene organische Reste mit endständiger aliphatischer Kohlenstoff-Kohlenstoff-Doppelbindung und mindestens drei Kohlenstoffatomen der Verbindung (B) vorhanden sind.

Im Fall von Platinverbindung (A) und 5-hexenylfunktionellen Organopolysiloxanen (B) werden die Mengen insbesondere so gewählt, daß pro Platinatom der Verbindung (A) 30 bis 500 5-Hexenylgruppen vorhanden sind.

Bei dem erfindungsgemäß eingesetzten, polaren organischen Lösungsmittel handelt es sich bevorzugt um solches, in dem Metallverbindung (A) mindestens zu 5 Gewichtsprozent bei 60 °C und 1012 hPa löslich ist. Beispiele für solche Lösungsmittel sind Alkohole, wie Ethanol und Isopropanol, Amide, wie beispielsweise Dimethylformamid, Ketone, wie z.B. Aceton und Butanon, cyclische Ether, wie Tetrahydrofuran und Dioxan, sowie deren Gemische, wobei Alkohole und Tetrahydrofuran bevorzugt sind.

Bei dem erfindungsgemäßen Verfahren wird polares organisches Lösungsmittel in Mengen von vorzugsweise 5 bis 40 Mol pro Mol Metallverbindung (A) eingesetzt.

Bei dem erfindungsgemäßen Verfahren wird vorzugsweise Neutralisationsmittel, wie beispielsweise Natriumhydrogencarbonat, Natriumcarbonat, Natriumacetat, Natriumhydrogenphosphat, Magnesiumoxid und basische Erden eingesetzt, wobei Natriumhydrogencarbonat bevorzugt ist.

Wird Neutralisationsmittel eingesetzt, handelt es sich vorzugsweise um Mengen von mindestens 1 bis 6 Mol Neutralisationsmittel pro Mol Metallverbindung (A).

Bei dem erfindungsgemäßen Verfahren werden Metallverbindung (A), Organopolysiloxan (B), polares organisches Lösungsmittel sowie gegebenenfalls Neutralisatiosmittel auf beliebige Art und Weise miteinander vermischt und bei einer Temperatur von vorzugsweise 40 bis 80 °C und einem Druck von vorzugsweise 900 bis 1100 hPa reagieren gelassen. Das erfindungsgemäße Verfahren kann aber auch bei niedrigeren oder höheren Temperaturen, wie z.B. 25 °C, und niedrigeren oder höheren Drücken durchgeführt werden.

Nach Beendigung der Umsetzung wird bevorzugt das überschüssige Neutralisationsmittel sowie andere angefallene Präzipitate durch Filtration entfernt und das eingesetzte Lösungsmittel durch Destillation, falls erwünscht, unter vermindertem Druck entfernt.

Die erfindungsgemäßen Metallkomplexe der 8. Nebengruppe mit ungesättigten Siloxanliganden haben den Vorteil, daß sie hochreaktive Katalysatorspezies für die Hydrosilylierungsreaktion darstellen.

Das erfindungsgemäße Verfahren hat den Vorteil, daß auf einfache Weise reine Metallkomplexe der 8. Nebengruppe mit ungesättigten Siloxanliganden erhalten werden.

Des weiteren hat das erfindungsgemäße Verfahren den Vorteil, daß insbesondere im Falle einer anschließenden Hydrosilylierungsreaktion das im Überschuß eingesetzte Siloxan nicht entfernt werden muß, da es als Reaktionsteilnehmer bei der Anlagerung von Si-gebundenem Wasserstoff an aliphatische Mehrfachbindung verbraucht wird.

Die erfindungsgemäßen Metallkomplexe der 8. Nebengruppe mit ungesättigten Siloxanliganden können überall dort eingesetzt werden, wo auch bisher Verbindungen oder Komplexe der 8. Nebengruppe eingesetzt worden sind. Insbesondere können sie als Katalysatoren eingesetzt werden, wo monomere oder polymere Siliciumverbindungen mit Si-gebundenem Wasserstoff an monomere oder polymere Verbindungen mit aliphatischer Mehrfachbindung angelagert werden sollen. Bei dieser Anlagerung können je nach Wahl der aneinander anzulagernden Verbindungen andere monomere, dimere beziehungsweise polymere, Silicium enthaltende Verbindungen entstehen oder modifiziert werden.

Ein weiterer Gegenstand der vorliegenden Erfindung ist ein Verfahren zum Anlagern von Siliciumverbindungen mit Si-gebundenem Wasserstoff an aliphatische Mehrfachbindung in Anwesenheit von erfindungsgemäßen Metallkomplexen der 8. Nebengruppe mit ungesättigten Siloxanliganden.

Ein weiterer Gegenstand der vorliegenden Erfindung sind Massen, die zusätzlich zu erfindungsgemäßen Metallkomplexen der 8. Nebengruppe mit ungesättigten Siloxanliganden

(1) Organopolysiloxane mit Si-gebundenen Wasserstoffatomen und gegebenenfalls

(2) Organopolysiloxane, die SiC-gebundene Reste mit aliphatischen Kohlenstoff-Kohlenstoff-Mehrfachbindungen aufweisen, enthalten oder anstelle von (1) und (2)

(3) Organopolysiloxane, die SiC-gebundene Reste mit aliphatischen Kohlenstoff-Kohlenstoff-Mehrfachbindungen und Si-gebundene Wasserstoffatome aufweisen, enthalten.

Unter Resten mit aliphatischen Kohlenstoff-Kohlenstoff-Mehrfachbindungen sind auch Reste mit cycloaliphatischen Kohlenstoff-Kohlenstoff-Mehrfachbindungen zu verstehen.

Als Organopolysiloxane (2), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der Formel

$$R^4_nR^5_mSiO_{\frac{4-n-m}{2}} \qquad (IV)$$

eingesetzt, wobei

- $R^4$ einen einwertigen von aliphatischen Kohlenstoff-Kohlenstoff-Mehrfachbindungen freien Kohlenwasserstoffrest mit 1 bis 18 Kohlenstoffatomen bedeutet,
- $R^5$ einen einwertigen Kohlenwasserstoffrest mit aliphatischer Kohlenstoff-Kohlenstoff-Mehrfachbindung mit 2 bis 8 Kohlenstoffatomen bedeutet,
- n 0, 1, 2 oder 3 ist und
- m 0, 1 oder 2 ist

mit der Maßgabe, daß die Summe n + m kleiner oder gleich 3 ist und durchschnittlich mindestens 2 Reste $R^5$ je Molekül vorliegen.

Die Organopolysiloxane (2) besitzen vorzugsweise eine durchschnittliche Viskosität von 10 bis 10 000 mm²/s bei 25 °C.

Beispiele für Kohlenwasserstoffreste $R^4$ sind die für R oben angegebenen Beispiele.

Beispiele für Reste $R^5$ sind Alkenylreste, wie der Vinyl-, 5-Hexenyl-, 1-Propenyl-, Allyl-, 1-Butenyl- und 1-Pentenylrest, und Alkinylreste, wie der Ethinyl-, Propargyl- und 1-Propinylrest.

Als Organopolysiloxane (1), die Si-gebundene Wasserstoffatome aufweisen, werden vorzugsweise lineare, cyclische oder verzweigte Organopolysiloxane aus Einheiten der Formel

$$R^4_gH_fSiO_{\frac{4-g-f}{2}} \qquad (V)$$

eingesetzt, wobei

- $R^4$ die oben dafür angegebene Bedeutung hat,
- g 0, 1, 2 oder 3 ist und
- f 0, 1 oder 2 ist,

mit der Maßgabe, daß die Summe von g + f kleiner oder gleich 3 ist und durchschnittlich mindestens 2 Si-gebundene Wasserstoffatome je Molekül vorliegen.

Die Organopolysiloxane (1) besitzen vorzugsweise eine durchschnittliche Viskosität von 10 bis 1 000 mm²/s bei 25 °C.

Als Organopolysiloxane (3), die aliphatische Kohlenstoff-Kohlenstoff-Mehrfachbindungen und Si-gebundene Wasserstoffatome aufweisen und anstelle von Organopolysiloxanen (1) und (2) verwendet werden können, werden vorzugsweise solche aus Einheiten der Formel

$$R^4_kSiO_{\frac{4-k}{2}}, \quad R^4_lR^5SiO_{\frac{3-l}{2}}, \quad \text{und} \quad R^4_pHSiO_{\frac{3-p}{2}}$$

eingesetzt, wobei $R^4$ oder $R^5$ die oben dafür angegebene Bedeutung haben,

- k 0, 1, 2 oder 3,
- l 0, 1 oder 2 und

p  0, 1 oder 2 ist,

mit der Maßgabe, daß je Molekül durchschnittlich mindestens 2 Reste $R^5$ und durchschnittlich mindestens 2 Si-gebundene Wasserstoffatome vorliegen.

Beispiele für Organopolysiloxane (3) sind solche aus $SiO_{4/2}$-, $R^4{}_3SiO_{1/2}$-, $R^4{}_2R^5SiO_{1/2}$- und $R^4{}_2HSiO_{1/2}$-Einheiten, sogenannte MQ-Harze, wobei diese Harze zusätzlich $R^4SiO_{3/2}$- und $R^4{}_2SiO$-Einheiten enthalten können und $R^4$ wie $R^5$ die obengenannte Bedeutung haben.

Die Organopolysiloxane (3) besitzen vorzugsweise eine durchschnittliche Viskosität von 10 bis 100 000 $mm^2/s$ bei 25 °C bzw. sind Feststoffe mit Molekulargewichten von 5000 bis 50 000 g/mol.

Die erfindungsgemäßen Metallkomplexe der 8. Nebengruppe werden vorzugsweise in Mengen von 1 bis 1000 Gew.-ppm (Gewichtsteilen je Million Gewichtsteilen), bevorzugt 10 bis 100 Gew.-ppm, jeweils berechnet als elementares Übergangsmetall Pt, Pd, Ru, Rh, Os oder Ir und bezogen auf das Gesamtgewicht der Organopolysiloxane (1) und (2) bzw. auf das Gesamtgewicht der Organopolysiloxane (3), eingesetzt.

Obwohl nicht bevorzugt, können bei den vernetzbaren Organopolysiloxanzusammensetzungen Inhibitoren mitverwendet werden. Beispiele für Inhibitoren sind Verbindungen, die auch bisher in Verfahren zur Anlagerung von Si-gebundenem Wasserstoff an aliphatische Mehrfachbindung eingesetzt werden konnten, wie beispielsweise 1,3 Divinyl-1,1,3,3-tetramethyldisiloxan, Benzotriazol, Dialkylformamide, Alkylthioharnstoffe, Methylethylketoxim, organische und siliciumorganische Verbindungen mit einem Siedepunkt von mindestens 25 °C bei 1012 hPa und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, eine Mischung aus Diallylmaleinat und Vinylacetat sowie Maleinsäuremonoester.

Die erfindungsgemäßen Metallkomplexe der 8. Nebengruppe können weiterhin bei allen Verfahren zur Umsetzung von Si-gebundene Wasserstoffatome aufweisenden Organosiliciumverbindungen mit aliphatische Mehrfachbindungen aufweisenden organischen Verbindungen eingesetzt werden, bei denen auch bisher die Anlagerung von Si-gebundenem Wasserstoff an aliphatische Mehrfachbindung fördernde Katalysatoren eingesetzt werden konnten.

Unter organischen Verbindungen mit aliphatischen Mehrfachbindungen sind auch organische Verbindungen mit cycloaliphatischen Mehrfachbindungen zu verstehen.

Beispiele für Si-gebundene Wasserstoffatome aufweisende Organosiliciumverbindungen, die mit aliphatische Mehrfachbindungen aufweisenden organischen Verbindungen umgesetzt werden können, sind Silane mit einem Si-gebundenen Wasserstoffatom je Molekül, wie Trichlorsilan, Dimethylchlorsilan, Dimethylethoxysilan, Methyldiethoxysilan, Methyldichlorsilan und Triethoxysilan, und Organopolysiloxane mit mindestens einem Si-gebundenen Wasserstoffatom je Molekül, wie $\alpha,\omega$-Dihydrogen[dimethylpolysiloxan], Tetramethyldisiloxan, Tetramethylcyclotetrasiloxan, Mischpolymerisate aus Trimethylsiloxan- und Methylhydrogensiloxaneinheiten, Mischpolymerisate aus Trimethylsiloxan-, Dimethylsiloxan- und Methylhydrogensiloxaneinheiten und Trimethylsiloxyhydrogensilan.

Beispiele für aliphatische Mehrfachbindungen aufweisende organische Verbindungen sind Verbindungen mit aliphatischer Kohlenstoff-Kohlenstoff-Doppelbindung wie Styrol, Allylglycidether, Allylcyanid, Allylacetat, Allylbernsteinsäureanhydrid, Glycolmonoallylether, Allylmethacrylat, Allylamin und Cyclohexen und Verbindungen mit aliphatischer Kohlenstoff-Kohlenstoff-Dreifachbindung, wie Acetylen und Butinol.

Die angewendeten Temperaturen und Drücke können im Rahmen des erfindungsgemäßen Verfahrens zum Anlagern von Si-gebundenem Wasserstoff an aliphatische Mehrfachbindung ebenfalls die gleichen sein wie bei den bisher bekannten Verfahren zum Anlagern von Si-gebundenem Wasserstoff an aliphatische Mehrfachbindung. Vorzugsweise handelt es sich um Temperaturen von 60 bis 150 °C und einen Druck von 900 bis 1100 hPa. Es können aber auch höhere oder niedrigere Temperaturen und Drücke angewendet werden.

Des weiteren haben die erfindungsgemäßen Metallkomplexe den großen Vorteil, daß aufgrund ihrer überschüssigen aliphatisch ungesättigten Siloxanliganden in speziellen additionsvernetzenden Systemen auf den weiteren Zusatz von aliphatisch ungesättigten Organopolysiloxanen verzichtet werden kann.

So werden die erfindungsgemäßen Metallkomplexe besonders bevorzugt in den in der deutschen Patentanmeldung mit dem Aktenzeichen P4336703.8 (Wacker-Chemmie GmbH; angemeldet am 27. Oktober 1993) beschriebenen, vernetzbaren Zusammensetzungen zur Herstellung von klebrige Stoffe abweisenden Überzügen eingesetzt. Von besonderem Vorteil ist hier, daß das Organosiloxan gleichzeitig Komplexligand und Vernetzer in der vernetzbaren Zusammensetzung ist. Dadurch ist ein Abmischen der Katalysatorkomponente mit dem Vernetzer nicht mehr notwendig.

Weiterhin befindet sich die katalysierende Metall-Spezies am Ort der höchsten Konzentration von reaktiven Gruppen, was einen optimalen Umsatz der Hydrosilylierungsreaktion erlaubt.

Die erfindungsgemäßen Massen können überall, wo auch bisher Massen auf der Grundlage von Organopolysiloxanen mit Si-gebundenem Wasserstoff und aliphatisch ungesättigten Resten eingesetzt werden, angewandt werden, wie z.B. als Einbettungsmassen für elektrische oder elektronische Vorrichtungen oder Beschichtungsmassen, einschließlich Massen zum Herstellen von klebrige Stoffe abweisenden Überzügen, zum Beispiel auf Papier, oder um Abformmassen, zum Beispiel für die Herstellung von Formkörpern aus Beton, insbesondere aber zum Erzeugen von Abdrücken von menschlichen oder tierischen Zähnen.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20 °C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25 °C.

Jodzahl bedeutet bei der Addition an die Doppelbindung verbrauchte Jodmenge in Gramm pro 100 Gramm eingesetztes, zu untersuchendes Material.

**Beispiel 1**

40 g eines hexenylfunktionellen Polydimethylsiloxanes der durchschnittlichen Formel

$(CH_3)_3SiO\text{-}(HexCH_3SiO)_{3,14}\text{-}Si(CH_3)_3$,

wobei Hex gleich 5-Hexenylrest bedeutet, mit der Jodzahl 109 und einer Viskosität von 17,5 $mm^2/s$, welches analog dem in der oben zitierten deutschen Anmeldung mit dem Aktenzeichen P4336703.8 hergestellt wird, werden mit 0,214 g (0,417 mmol) Hexachloroplatinsäure, 10 g (217,4 mmol) Ethanol, 10 g (138,67 mmol) Tetrahydrofuran (THF) und 4 g (47,61 mmol) Natriumhydrogencarbonat versetzt. Die Reaktionsmischung wird 5 Stunden bei 60 °C und anschließend 15 Stunden bei Raumtemperatur gerührt. Nach der Filtration wird die Lösung im Hochvakuum bis zur Gewichtskonstanz eingeengt. Man erhält 35,0 g (Ausbeute: 87,3 % d.Th.) eines schwach gelben, transparenten Öles. Das so erhaltene Produkt wird nun mit einer solchen Menge des oben beschriebenen hexenylfunktionellen Polydimethylsiloxanes versetzt bis eine Platinkonzentration von 0,14 Gew.%, bezogen auf Platinmetall, resultiert (Vernetzermischung 1).

**Vergleichsbeispiel 1**

40 g eines vinylfunktionellen, kurzkettigen Polydimethylsiloxans der gemittelten Struktur

$(CH_3)_3Si(OSiCH_3)_6OSi(CH_3)_3$
|
$CH{=}CH_2$

mit der Jodzahl 236 und einer Viskosität von 7,86 $mm^2/s$ werden mit 0,214 g (0,417 mmol) Hexachloroplatinsäure, 10 g (217,4 mmol) Ethanol, 10 g (138,67 mmol) THF und 4 g (47,61 mmol) Natriumhydrogencarbonat versetzt. Die Reaktionsmischung wird 5 Stunden bei 60 °C und anschließend 15 Stunden bei Raumtemperatur gerührt. Nach der Filtration wird die Lösung im Hochvakuum bis zur Gewichtskonstanz eingeengt. Man erhält 35,5 g ( Ausbeute: 88,5 % d.Th.) eines farblosen, transparenten Öles. Das so erhaltene Produkt wird nun mit einer solchen Menge des oben beschriebenen vinylfunktionellen Polysiloxanes versetzt bis eine Platinkonzentration von 0,14 Gew.%, bezogen auf Platinmetall, resultiert (Vernetzermischung 2).

**Beispiel 2**

40 g des oben in Beispiel 1 beschriebenen hexenylfunktionellen, kurzkettigen Polydimethylsiloxanes mit der Jodzahl 109 und einer Viskosität von 17,5 $mm^2/s$ werden mit 0,233 g (0,454 mmol) Natriumhexachloroplatinat, 10 g (217,4 mmol) Ethanol, 10 g (138,67 mmol) THF und 3 g (35,71 mmol) Natriumhydrogencarbonat versetzt. Die Reaktionsmischung wird 5 Stunden bei Raumtemperatur gerührt. Nach der Filtration wird die Lösung im Hochvakuum bis zur Gewichtskonstanz eingeengt. Man erhält 36,2 g (Ausbeute: 90,3 % d.Th.) eines gelben, transparenten Öles. Das so erhaltene Produkt wird nun mit einer solchen Menge des

oben beschriebenen hexenylfunktionellen Polysiloxanes versetzt bis eine Platinkonzentration von 0,14 Gew.%, bezogen auf Platinmetall, resultiert.

**Beispiel 3**

0,35 g Vernetzermischung 1 (0,14 % Platin), deren Herstellung in Beispiel 1 beschrieben ist, werden mit 4,46 g eines Equilibrates aus Hydrogendimethylsiloxy- und Dimethylsiloxyeinheiten der Viskosität 240 $mm^2/s$, (Wasserstoffgehalt: 1,63 Gew.-%) und 3,72 mg (0,02995 mmol) 1-Ethinylcyclohexan-1-ol versetzt. Die Mischung enthält 98 ppm Pt, bezogen auf Platinmetall.

Die Vernetzungseigenschaften des Systems werden mittels Wärmeflußkalorimetrie bei einer Aufheizrate von 10 Kelvin pro Minute ermittelt. Die Ergebnisse finden sich in Tabelle 1.

Tabelle 1

| $T_{max}$ [°C] | $T_{onset}$[°C] | $T_{offset}$[°C] | $T_{ons.}/T_{offs}$ | H[-J/g] |
|---|---|---|---|---|
| 87,4 | 83,0 | 104,9 | 0,791 | 22,8 |

$T_{max}$ = Peakmaximum der exothermen Vernetzungsreaktion
$T_{onset}$ = Temperatur, bei der die Vernetzungsreaktion beginnt,
$T_{offset}$ = Temperatur, bei der die Vernetzungsreaktion abgeschlossen ist
$T_{ons.}/T_{offs.}$ = Quotient aus Onset- und Offset-Temperatur und ein Maß für die Dauer der Vernetzungsreaktion (bestmöglicher Wert = 1)
H = Reaktionsenthalpie der Vernetzungsreaktion auf 1 g der vernetzenden Masse genormt.

Die vollständige makroskopische Vernetzung des Systems erfolgt bei 60°C nach 17 Minuten im Reaktionsgefäß des Viskositätsmeßgeräts, dem sogenannten Gel-Timer. Man erhält 5 g eines transparenten, unlöslichen, harten Produktes.

**Vergleichsbeispiel 2**

0,35 g der in Vergleichsbeispiel 1 beschriebenen Vernetzermischung 2 (0,14 % Platin) werden mit 4,55 g eines Equilibrates aus Hydrogendimethylsiloxy- und Dimethylsiloxyeinheiten der Viskosität 240 $mm^2/s$, 0,0195 g eines mit Trimethylsilylgruppen endgestopperten Hydrogenmethylpolysiloxanes der Viskosität 21 $mm^2/s$ (Wasserstoffgehalt: 1,63 Gew.-%) und 3,72 mg (0,02995 mmol) 1-Ethinylcyclohexan-1-ol versetzt. Die Mischung enthält 98 ppm Platin bezogen auf Platinmetall.

Die Vernetzungseigenschaften des Systems werden mittels Wärmeflußkalorimetrie bei einer Aufheizrate von 10 Kelvin pro Minute ermittelt (Tab. 2).

Tabelle 2

| $T_{max}$ [°C] | $T_{onset}$[°C] | $T_{offset}$[°C] | $T_{ons.}/T_{offs}$ | H[-J/g] |
|---|---|---|---|---|
| 144,2 | 117,9 | 177,2 | 0,665 | 3,7 |

$T_{max}$, $T_{onset}$, $T_{offset}$, $T_{ons.}/T_{offs}$ und H haben die bei Tabelle 1 angegebene Bedeutung.

Eine makroskopische Vernetzung des Systems erfolgt bei 60°C nach 40 Minuten im Gel-Timer. Man erhält 5 g eines transparenten, unlöslichen, gelartigen Produktes.

**Beispiel 4**

0,35 g der in Beispiel 1 beschriebenen Vernetzermischung 1 (0,14 % Platin) werden mit 4,54 g eines $\alpha,\omega$-Divinylpolydimethylsiloxanes der Viskosität 500 $mm^2/s$, 0,11 g eines mit Trimethylsilylgruppen endgestopperten Hydrogenmethylpolysiloxanes der Viskosität 21 $mm^2/s$ (Wasserstoffgehalt: 1,6 Gew.-%) und 3,72 mg (0,02995 mmol) 1-Ethinylcyclohexan-1-ol versetzt. Die Mischung enthält 98 ppm Platin bezogen auf Platinmetall.

Die Vernetzungseigenschaften des Systems werden mittels Wärmeflußkalorimetrie bei einer Aufheizrate von 10 Kelvin pro Minute ermittelt (Tab. 3).

Tabelle 3

| $T_{max}$ [°C] | $T_{onset}$[°C] | $T_{offset}$[°C] | $T_{ons.}/T_{offs}$ | H[-J/g] |
|---|---|---|---|---|
| 91,9 | 86,7 | 118,5 | 0,732 | 27,5 |
| $T_{max}$, $T_{onset}$, $T_{offset}$, $T_{ons.}/T_{offs}$ und H haben die bei Tabelle 1 angegebene Bedeutung. | | | | |

Die vollständige Vernetzung (lösliche Anteile < 3 Gew.-%) des Systems erfolgt bei 60°C nach 20,7 Minuten. Man erhält 5 g eines transparenten, unlöslichen, harten Produktes.

**Vergleichsbeispiel 3**

0,35 g der in Vergleichsbeispiel 1 beschriebenen Vernetzermischung 2 (0,14 % Platin) werden mit 4,54 g eines α,ω-Divinylpolydimethylsiloxanes der Viskosität 500 $mm^2/s$, 0,11 g eines mit Trimethylsilylgruppen endgestopperten Hydrogenmethylpolysiloxanes der Viskosität 21 $mm^2/s$ (Wasserstoffgehalt: 1,6 Gew.-%) und 3,72 mg (0,02995 mmol) 1-Ethinylcyclohexan-1-ol versetzt. Die Mischung enthält 98 ppm Platin bezogen auf Platinmetall.

Die Vernetzungseigenschaften des Systems werden mittels Wärmeflußkalorimetrie bei einer Aufheizrate von 10 Kelvin pro Minute ermittelt (Tab. 4).

Tabelle 4

| $T_{max}$ [°C] | $T_{onset}$[°C] | $T_{offset}$[°C] | $T_{ons.}/T_{offs}$ | H[-J/g] |
|---|---|---|---|---|
| 95,0 | 68,0 | 130,9 | 0,519 | 10,5 |
| $T_{max}$, $T_{onset}$, $T_{offset}$, $T_{ons.}/T_{offs}$ und H haben die bei Tabelle 1 angegebene Bedeutung. | | | | |

Eine vollständige Vernetzung des Systems bei 60°C konnte innerhalb von 2 Stunden überhaupt nicht erreicht werden. Man erhält 5 g eines transparenten, höher viskosen Produktes.

**Patentansprüche**

**1.** Metallkomplexe der 8. Nebengruppe mit ungesättigten Siloxanliganden erhältlich durch Umsetzung von Verbindungen der Metalle der 8. Nebengruppe (A) mit Organopolysiloxanen, die mindestens drei SiC-gebundene organische Reste mit endständiger aliphatischer Kohlenstoff-Kohlenstoff-Doppelbindung und mindestens drei Kohlenstoffatomen aufweisen (B).

**2.** Metallkomplexe der 8. Nebengruppe mit ungesättigten Siloxanliganden gemäß Anspruch 1, dadurch gekennzeichnet, daß es sich bei den Verbindungen der Metalle der 8. Nebengruppe (A) um Platin(IV)-halogenide handelt.

**3.** Metallkomplexe der 8. Nebengruppe mit ungesättigten Siloxanliganden gemäß Anspruch 1 oder 2, dadurch gekennzeichnet, daß es sich bei den Organopolysiloxanen (B) um solche aus Einheiten der Formel

$$R_aR^1_bSiO_{\frac{4-a-b}{2}} \qquad (I)$$

handelt, wobei

R gleich oder verschieden sein kann und aliphatisch gesättigte, gegebenenfalls substituierte

SiC-gebundene Kohlenwasserstoffreste mit 1 bis 18 Kohlenstoffatomen bedeutet,

$R^1$ gleich oder verschieden sein kann und SiC-gebundene Reste der Formel $-R^2-CH=CH_2$ bedeutet mit $R^2$ gleich zweiwertigen Kohlenwasserstoffresten mit 1 bis 12 Kohlenstoffatomen,

a 0, 1, 2 oder 3 und

b 0, 1, 2 oder 3 ist,

mit der Maßgabe, daß die Summe von a und b kleiner oder gleich 3 ist und Organopolysiloxan (B) pro Molekül mindestens 3 Reste $R^1$ aufweist,

sowie um Copolymere aus Organopolysiloxanblöcken und Kohlenwasserstoffblöcken, wobei mindestens ein Kohlenwasserstoffblock mindestens zwei Siloxanblöcke verbindet, mit der Maßgabe, daß die genannten Copolymere pro Molekül mindestens drei Reste $R^1$ aufweisen.

**4.** Metallkomplexe der 8. Nebengruppe mit ungesättigten Siloxanliganden gemäß einem oder mehreren der Ansprüche 1 bis 3, dadurch gekennzeichnet, daß es sich bei den Organopolysiloxanen (B) um solche handelt, die im wesentlichen aus Einheiten der Formel

$$R^1_cR_{3-c}SiO_{1/2} \quad (II)$$

und

$$R^1_dR_{2-d}SiO_{2/2} \quad (III)$$

bestehen, worin R und $R^1$ die oben dafür angegebene Bedeutung haben, c 0, 1, 2 oder 3 ist und d 0, 1 oder 2 ist, mit der Maßgabe, daß Organopolysiloxan (B) pro Molekül mindestens 3 Reste $R^1$ aufweist.

**5.** Metallkomplexe der 8. Nebengruppe mit ungesättigten Siloxanliganden gemäß einem oder mehreren der Ansprüche 1 bis 4, dadurch gekennzeichnet, daß $R^1$ die Bedeutung von 5-Hexenylrest hat.

**6.** Verfahren zur Herstellung von Metallkomplexen der 8. Nebengruppe mit ungesättigten Siloxanliganden durch Umsetzung von Verbindungen der Metalle der 8. Nebengruppe (A) mit Organopolysiloxanen, die mindestens drei SiC-gebundene organische Reste mit endständiger aliphatischer Kohlenstoff-Kohlenstoff-Doppelbindung und mindestens drei Kohlenstoffatomen aufweisen (B), in Gegenwart von polarem organischen Lösungsmittel sowie gegebenenfalls Neutralisationsmittel.

**7.** Verfahren nach Anspruch 6, dadurch gekennzeichnet, daß Organopolysiloxan (B) und Metallverbindung (A) vorzugsweise in solchen Mengen eingesetzt werden, daß pro Metallatom der Verbindung (A) 10 bis 1000 SiC-gebundene organische Reste mit endständiger aliphatischer Kohlenstoff-Kohlenstoff-Doppelbindung und mindestens drei Kohlenstoffatomen der Verbindung (B) vorhanden sind.

**8.** Verfahren zum Anlagern von Siliciumverbindungen mit Sigebundenem Wasserstoff an aliphatische Mehrfachbindung in Anwesenheit von Metallkomplexen der 8. Nebengruppe mit ungesättigten Siloxanliganden gemäß Anspruch 1.

**9.** Massen, die zusätzlich zu Metallkomplexen der 8. Nebengruppe mit ungesättigten Siloxanliganden gemäß Anspruch 1

(1) Organopolysiloxane mit Si-gebundenen Wasserstoffatomen

und gegebenenfalls

(2) Organopolysiloxane, die SiC-gebundene Reste mit aliphatischen Kohlenstoff-Kohlenstoff-Mehrfachbindungen aufweisen,

enthalten oder anstelle von (1) und (2)

(3) Organopolysiloxane, die SiC-gebundene Reste mit aliphatischen Kohlenstoff-Kohlenstoff-Mehrfachbindungen und Si-gebundene Wasserstoffatome aufweisen,

enthalten.

Europäisches Patentamt

# EUROPÄISCHER RECHERCHENBERICHT

Nummer der Anmeldung
EP 95 10 3862

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | GB-A-2 252 771 (DOW CORNING)<br>* Ansprüche 1,6,8 *<br>* Seite 3, Zeile 1 - Zeile 14 * | 1-3 | C08G77/38<br>C07F15/00 |
| D,X | & US-A-5 175 325 (SCOTT S. D. BROWN)<br>--- | 1-3 | |
| E | EP-A-0 648 774 (DOW CORNING CORPORATION)<br>* Ansprüche 1,2,8-10 *<br>* Seite 2, Zeile 54 - Seite 3, Zeile 3 * | 1-3 | |
| P,X | & US-A-5 312 937 (STEVEN H. WAIER)<br>--- | 1-3 | |
| X | EP-A-0 416 471 (DOW CORNING TORAY SILICONE COMPANY LTD.)<br>* Ansprüche 1,3,4,6 *<br>* Seite 3, Zeile 26 - Zeile 27 *<br>--- | 1 | |
| A | US-A-4 398 010 (JAMES R. ADKINS)<br>* Ansprüche 1-3,9 *<br>* Spalte 3, Zeile 11 - Zeile 42 *<br>--- | 1 | |
| A | US-A-3 814 730 (BRUCE D. KARSTEDT)<br>* Ansprüche 1,5 *<br>--- | 1 | **RECHERCHIERTE SACHGEBIETE (Int.Cl.6)** |
| D,A | US-A-3 775 452 (BRUCE D. KARSTEDT)<br>* Anspruch 1 *<br>* Spalte 3, Zeile 54 - Zeile 58 *<br>----- | 1 | C08G<br>C07F |

Der vorliegende Recherchenbericht wurde für alle Patentansprüche erstellt

| Recherchenort | Abschlußdatum der Recherche | Prüfer |
|---|---|---|
| DEN HAAG | 1.Juni 1995 | Depijper, R |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)